# EUROPEAN PATENT APPLICATION

(11) **EP 4 496 136 A1**
(43) Date of publication of application: **22.01.2025**
(21) Application number: 23306237.1
(22) Date of filing: 18.07.2023
(51) Int. Cl.: H01R 13/52, H01R 13/595, H02G 3/08, H02G 3/14, H01R 4/38, H01R 12/51

(54) **COVER BOX FOR PROTECTING AN ELECTRICAL CONNECTION, ASSEMBLY, AND RELATED METHOD**

(71) Applicant: Schneider Toshiba Inverter Europe SAS, 27120 Pacy-sur-Eure (FR)
(72) Inventor: LEON, Frédéric, 27930 LE VIEIL EVREUX (FR)
(74) Representative: Plasseraud IP

(57) **Abstract**

A cover box (10) comprising two half-shells (11, 12) configured to accommodate at least part of an electrical connection (1), each half-shell (11, 12) comprising:
- a recess (15), opening into said interior volume (V);
- latching means;
the half-shells (11, 12) being able to be assembled together by cooperation of latching means of a first half-shell (11) with the latching means of a second half-shell (12), the recess (15) of the first half-shell (11) facing the recess (15) of the second half-shell (12) when the half-shells (11, 12) are assembled together, said electrical connection (1) comprising a screw and a nut (51) cooperating with said screw (5), the nut being able to be engaged in the recess of the first half-shell (11), a head (52) of said screw (5) being able to be engaged in the recess (15) of the second half-shell (12).

## Description

### Technical Field

The present disclosure pertains to the field of electrical connection, and cover boxes to protect them, for example from the reach of a user to avoid accidents.

### Background Art

It is known to cover electrical connections in order to prevent a user from touching any conductive part. Such covers are usually made of at least two different plastic parts that are meant to be assembled to cover the electrical connection.

Such solutions are usually difficult to assemble and/or provide too little protection to meet the IP20 requirements which is to prevent the intrusion of any 12,5mm wide object, for example, a user's finger.

Furthermore, electrical connections may be of different sizes depending on the number of cables that are assembled. Different sizes of connections thus mean different sizes and sometimes different shapes of cover boxes which imply non negligeable cost.

The present disclosure aims at reducing at least part of the disadvantages described above.

### Summary

The present disclosure concerns a cover box, for protecting an electrical connection, the cover box comprising a first and a second half-shell delimiting an interior volume configured to accommodate at least part of the electrical connection, each half-shell comprising:
- a recess, opening into said interior volume;
- latching means;
the half-shells being able to be assembled together by cooperation of the latching means of the first half-shell with the latching means of the second half-shell, the recess of the first half-shell facing the recess of the second half-shell when the half-shells are assembled together, said electrical connection comprising a screw and a nut cooperating with said screw, the nut being able to be engaged in the recess of the first half-shell, a head of said screw being able to be engaged in the recess of the second half-shell.

This solution provides a secure cover box that requires simple design and minimum cost. Also, the box is held in place by the cooperation between the recesses and the screw and nut, which rarely vary in size. It is therefore possible to use the same cover box for different thickness of electrical connection. The cover box according to the present disclosure is thus usable on a great variety of electrical connections provided they comprise a screw and a nut.

The cover box may be dimensioned to allow application on a large variety of electrical connections. The cover box may be designed in for example 2, 3 or more sizes that may cover the majority of electrical connections. Therefore, a variation of size from one electrical connection to the other may at most imply the use of a different available size, instead of having to specifically design a new cover for each different connection.

Such a solution does not need any additional fixation part to cover the electrical connection and is thus easy to mount, manufacture and maintain.

Both half-shells may be obtained with molded plastic, for example by injection molding. The plastic material can be polyethylene or polycarbonate.

In an embodiment, said cover box does not comprise any opening larger than 12,5 mm, once both half-shells are latched together. This allows to meet the IP20 safety requirements that may prevent the reach of the electrical parts inside the cover box by a smaller object, or by a user, for example a user's finger.

In an embodiment, each half-shell is generally parallelepiped-shaped comprising 4 outer walls, and a base wall defining an open volume on one side that remains open. Said open side of the first half-shell may comprise a contour designed to accommodate the open side of a second half-shell. In an embodiment, the contour of the first half-shell may be complementary to the contour of the second half-shell to continuously close the gap between both half-shells.

Generally, each half-shell may comprise an elongation direction, going from one smaller side to the other, a transversal direction going from one bigger side to the other, and a vertical direction going from the base through the opposite open side.

In an embodiment, each half-shell may comprise an outer wall that is opened to let one or more connective parts of the electrical connection through the cover box. In an embodiment, a contour of an opened volume defined by each half-shell may be interrupted by a shorter outer wall to provide an open space in which one or more conductive part can be accommodated. This allows to close the cover box around an electrical connection that comprises for example one or more bar. In an embodiment, on an opposite side, each half shell may comprise another opening, said contour being interrupted again, to let another conductive part through, for example one or more cables.

According to an embodiment, the recess can be of any shape provided it can accommodate the nut and/or the screw head to prevent the latched together half-shells from being pulled or move away from the electrical connection. The recess is not meant to prevent the rotation of the cover box around the screw of the electrical connection but is at least meant to comprise a surface to block any movement away from the screw along the one or more cable. In an embodiment, the recess can be a cylindrical shaft protruding from the surface than defines the interior volume inside the cover box in such a way that the recess of each half-shell can face each-other when latched together. In an embodiment, it can be a well without any protruding walls. In an embodiment, the recess can comprise an opening with a circular cross-section, in which a hexagonal nut can be lodged. In an embodiment, the recess can comprise any polygonal cross-section provided it can accommodate a nut or a screw head.

In an embodiment, the recess feature a cross section, for example a circular cross-section, that allow for a small rotary travel of the connection, which may prevent early breakage of the cover box when hustled by operations on the cables of the electrical connection or on surrounding equipment.

In an embodiment, the recess may comprise a depth that is determined to allow the accommodation of at least part of the nut in addition to the overlength part of the screw that extends passed the nut.

In an embodiment, the first and second half shells are identical. This means they comprise the same shape and the same dimensions. In an embodiment in which the half-shells are obtained by molding a plastic material, both half-shells can typically be made in the same mold, or in identical molds.

In an embodiment in which both half-shells are identical, the latching means of each half shell may comprise a male and a female part, each located on an opposite side of the half-shell, the male part respectively the female part of the first half-shell being configured to meet the female part respectively the male part of the second half-shell.

In an embodiment, the latching means comprising a tab and a notch, the tab, respectively the notch, of the first half-shell being able to cooperate with the notch, respectively the tab, of the second half-shelf.

In an embodiment, the latching means are configured to cooperate with one another by an elastic deformation of at least one part. The latching means being then configured to disassemble by elastic deformation of the same, or another deformable part.

In an embodiment, the tab may be elastically deformable and protrude vertically from the half-shell, for example from an outer wall, and comprise a free end. The free end may comprise a tooth or any protrusion with a stopping surface. The elastic deformation of the tab allowing the protrusion to be at least mobile along a transversal direction of the cover box. The notch of each half-shell may comprise a hollow sleeve elongating vertically and comprising two openings at its ends configured to let all the way through the elongated tab of the other half-shell, the tooth comprising a biased surface to force the tab out of a resting state when let through the sleeve to a bending state, the sleeve then comprising a stopping edge configured to block the stopping surface of the tooth when the tab comes back to its resting state, the cooperation between the stopping surface and the stopping edge preventing the two half-shells from disassembling.

In an embodiment, the latching means may comprise two safety walls elongating vertically on both sides of the latching means, the safety walls being located at a distance from each other, thus preventing objects that are bigger than that distance to pass between the safety walls and reach the latching means. Said distance may be determined in accordance to the objects one wishes to prevent the intrusion.

In an embodiment in which the latching means are configured to be disassembled by deformation of at least one part, such safety walls are particularly useful to prevent a user from disassembling the latching means. In that case, the distance between both safety walls may be inferior to the size of a finger, for example 12,5mm.

In an embodiment, the safety walls may be located at such a distance that prevents the intrusion of a finger but permits the intrusion of a smaller tool, for example a screwdriver, that a permitted user may be in possession of, for example to bend the latching means back and to allow the opening of the cover box for determined purposes, for example emergency reasons or maintainability.

Each safety wall comprising a first and a second part, the first half-shell comprising the first part, the second half-shell comprising the second part, both parts of each safety wall defining an extension of each other when the first and second half-shells are assembled. Such an embodiment help prevent to manufacture too long protruding parts that may break during transportation of mounting. Designing a second part for each safety walls allow to add length for the part without increasing the risk of breakage. Furthermore, when combined with an embodiment in which the half-shells are molded from plastic, shorter protrusions allow an easier demolding operation minimizing the risk of featuring undercuts.

In an embodiment, the two safety walls may comprise biased guiding surfaces defining two slopes leading to the space between the two safety walls, the guiding surfaces of a first half-shell being able to guide the latching means of a second half-shell between the two safety walls.

In an embodiment, the guiding surfaces may be of the shape of a chamfer or may comprise a radius, or any shape that may induce a centering function, to lead the movement of cooperating latching means towards the space in between both safety walls.

In an embodiment, each half-shell comprising an air inlet defining at least one aperture to link the interior volume to the outside of the cover box. In fact, the electrical connection may heat up during use and a lack or air circulation around the connection may result in over-heating, thus damaging the assembled conductive parts and/or the cover box, or even result in fire hazard.

In an embodiment, air inlets may feature an elongated shape, for example elongated transversally and a width that may be determined to prevent the intrusion of bigger objects, for example the reach of a user with their finger. The width of each air inlet may be for example inferior to 12,5 mm to meet the IP20 requirements.

In an embodiment, each half-shell may comprise a cable passage delimiting an aperture comprising a first and/or a second part of aperture, the first half-shell comprising the first part of aperture and/or the second half-shell comprising the second part of aperture, each of the first and/or second part of aperture being able to let through an electric cable of the electrical connection. This allows the complete assembling of both half-shells together, without any obstacle preventing the latching means from cooperating.

In an embodiment, the first and second parts of aperture may be obstructed by at least one detachable cover. Such a feature may allow the parts of aperture to be adapted according to the number and sizes of cables of the electrical assembly. Each detachable part may be configured to obstruct a surface that corresponds to the cross section of possible references of cable to cover at least a majority of electrical connection possible configurations.

In an embodiment, a first bigger detachable part may comprise an aperture obstructed by a smaller detachable part, the smaller detachable part may in turn comprise a smaller aperture obstructed by an even smaller detachable part, and so on. In this case, during the mounting operation, according to the size and number of cables, one can detach the one or more corresponding part to create openings that feature the right size to perfectly fit the cables. This allows to keep the smallest gap possible even when sizes and number of cables change. For example, detachable parts may be designed to keep at all times a gap between cables and cover box smaller than 12,5 mm to meet the IP20 requirements.

In an embodiment, the cover box may comprise an obstruction tab, the first half-shell comprising a first part of obstruction tab and/or the second half-shell comprising a second part of obstruction tab, when the first and second half-shells are assembled together and each part of aperture is letting through a cable of the electrical connection, the obstruction tab being configured to obstruct at least part of a space between the cables. The obstruction tab or each part of obstruction tab may feature a curved edge to match the shape of the cables. This allows the gap between cables to be filled or at least partly filled to prevent the intrusion of objects, such as for example a finger of a user.

In an embodiment, the first and/or second part of obstruction tab are rigid parts that protrude from their respective half-shell, each part of obstruction tab protruding in a non-perpendicular way with the cables.

In an embodiment, one or more part of the obstruction tab may comprise a hinge, for example a deformable hinge, so that the obstruction tab may be folded in place, for example perpendicular to the cable, to fill the gap between cables. When combined with an embodiment in which both half-shells are identical, each half of an obstruction tab comprising a hinge may be designed to feature a specific shape that allow the folding of both halves without interfering with one another and/or with the cables.

In an embodiment, the obstruction tab can be fully featured by one of the two half-shells, the other one not comprising any part of obstruction tab.

In an embodiment, each half-shell may comprise centering holes and pins, the pins, respectively the centering holes, of the first half shell being able to cooperate with the centering holes, respectively the pins, of the second half-shell when the half-shells are assembled together, the centering holes and pins being able to bring the latching means of the first half-shell facing the latching means of the second half-shell. This helps facilitating the assembling of both half-shells together. Furthermore, the cooperation between the pins and holes may help stiffen the cover box to minimize the possible deformation near the junction between both half-shells.

In an embodiment, the pins may have a cross shaped cross-section.

In an embodiment, the pins may comprise biased top guiding surfaces defining slopes configured to guide the pins into the centering holes.

In an embodiment, the top guiding surfaces may be of the shape of chamfers or may comprise a radius, or any shape that may induce a centering function, to lead the cooperation between the pins and the holes.

The present disclosure concerns an assembly comprising a cover box as described above and an electrical connection comprising:
- a bar;
- at least one ring-tongue, each ring-tongue being at an end of an electric cable;
- A screw inserted through said bar and said ring-tongue, the screw comprising a screw head and elongating along a first direction;
- And a nut tightening said ring-tongue to said bar in cooperation with the screw head;
- One or more optional wafer,
the electrical connection being at least partly accommodated by said cover box.

Generally, the bar is a generic term that refers to any conductive part configured to be connected to another by at least a screw and a nut. In an embodiment the bar is a copper bar. In an embodiment, the bar comprises a hole or an opening configured to let a screw through.

Generally, the ring-tongue is a generic term that refers to any conductive part that is fixed at an end of a cable and that is configured to be connected to another by at least a screw and a nut. The ring-tongue usually comprise a hole, and or an opening to let a screw through.

The present disclosure concerns a method for protecting the electrical connection of the assembly described above, the ring-tongue being joined to the bar by the tightened nut in cooperation with the screw head, the electrical connection being protected with the cover box of said assembly, the method comprising:
- Bringing a first half-shell of the cover box to engage the nut of the electrical connection inside the recess of the first half-shell;
- Bringing a second half-shell of the cover box to engage the screw head of the electrical connection inside the recess of the second half-shell;
- Assembling the two half-shells by bringing them together along the direction, joining the latching means of the first half-shell with the respective latching means of the second half-shell.

In the method described above, the cover box can be mounted around an already tightened electrical assembly without any mounting or dismounting operation on said electrical assembly. This may further improve the safety of the mounting operation of the cover box because no touching of the electrical connection is required.

### Brief Description of Drawings

Other features, details and advantages will be shown in the following detailed description and on the figures, on which:
Fig. 1 is an embodiment of a cover box accommodating an electrical connection,
Fig. 2 is a view of an embodiment of a cover box in two disassembled half-shells,
Fig. 3 is a view of an embodiment of a cover box in two assembled half-shells,
Fig. 4 is a detailed view of an embodiment of a cooperation between recesses with screw head and nut,
Fig. 5 is a view of an embodiment allowing angular travel of the cover box,
Fig. 6 is a view of an embodiment of notch,
Fig. 7 is a view of an embodiment of tab,
Fig. 8 is a view of a particular embodiment using two ring-tongues and cables.

### Description of Embodiments

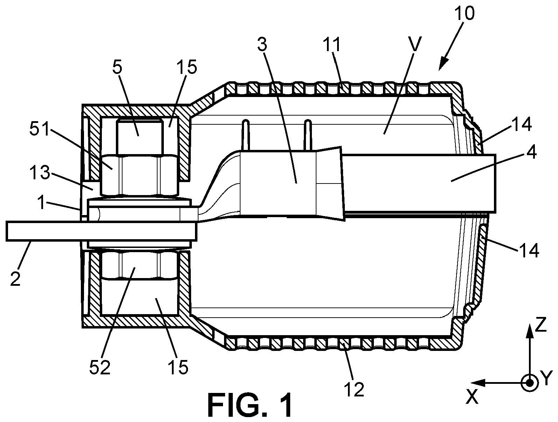

In reference to figure 1, is displayed an electrical connection 1 comprising:
- a bar 2;
- at least one ring-tongue 3, each ring-tongue 4 being at an end of an electric cable 4;
- A screw 5 inserted through said bar 2 and said ring-tongue 3, the screw 5 comprising a screw head 52 and elongating along a first direction Z;
- A nut 51 tightening said ring-tongue 3 to said bar 2 in cooperation with the screw head 52;
- And two wafers: one between the nut and the ring-tongue, the other between the screw head 52 and the bar 2.

Still in reference to figure 1, the electrical connection is protected by a cover box 10 comprising a first and a second half-shell 11, 12 delimiting an interior volume V configured to accommodate at least part of the electrical connection 1, each half-shell 11, 12 comprising a recess 15, opening into said interior volume V.

In order to enhance the clarity of the description of the drawings, it is considered the following 3-axis reference frame: an elongation direction X, a transversal direction Y, and a vertical direction Z.

As shown on figure 1, the nut 51 of the electrical connection is able to engage in the recess of the first half-shell 11, a head 52 of said screw 5 is able to engage in the recess 15 of the second half-shell 12, latching means 16, 17 (that are not represented on this figure), are maintaining both half shells together and consequently both the screw head 52 and the nut 51 accommodated in the recesses thus preventing the cover box from being pulled or moved, in this case along the cables, away from the electrical connection. The top half-shell recess is here deep enough to accommodate both the nut and the part of the screw that passes through the nut further passed its other side. The top of the recess even acts as a stopping surface and allows the cover box to rest on this part of the screw.

In the embodiment represented Figure 1, is shown a bar opening 13 that is configured to allow the assembling of both half-shells around the bar of the electrical connection without interfering with it.

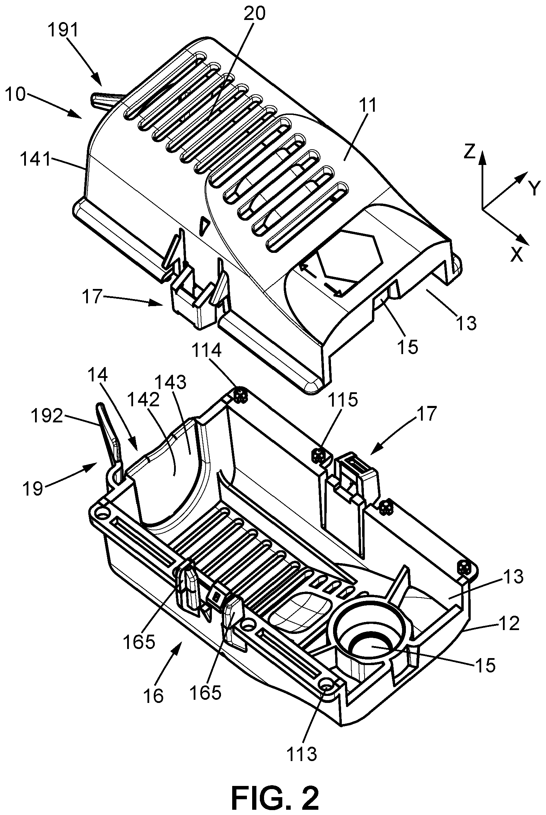

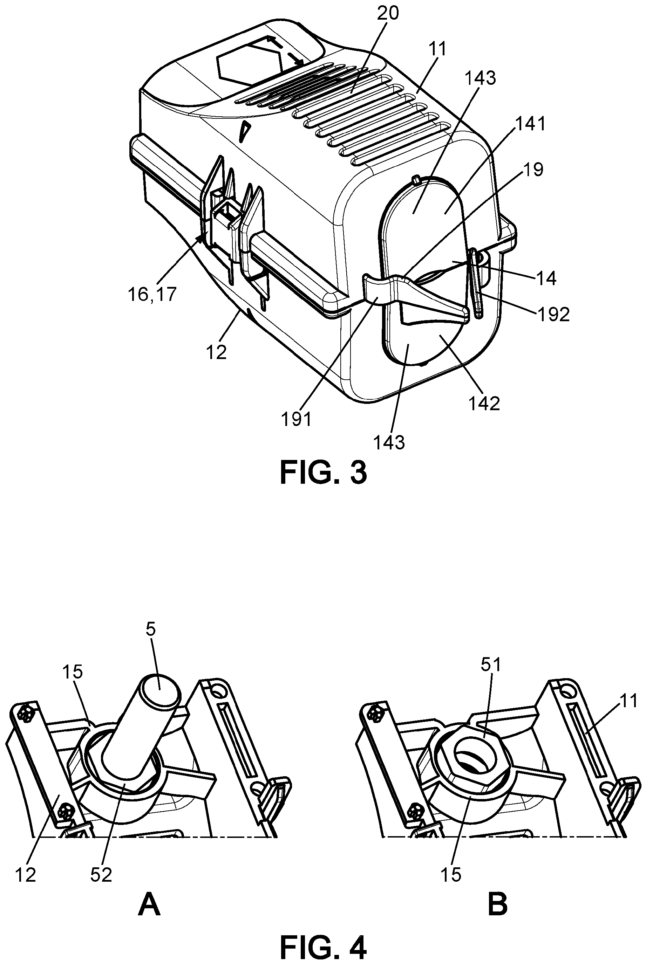

Further details of an embodiment of the cover box are shown on figure 2 and 3, wherein the half-shells are two identical parts. The half-shells 11, 12 are able to be assembled together by cooperation of the latching means 16, 17 of the first half-shell 11 with the latching means 16, 17 of the second half-shell 12, the recess 15 of the first half-shell 11 then facing the recess 15 of the second half-shell 12 along the first direction Z when the half-shells 11, 12 are assembled together around an electrical connection, thus accommodating the screw head and the nut.

The latching means 16, 17 here comprise a tab 16 and a notch 17, the tab 16, respectively the notch 17, of the first half-shell 11 being able to cooperate with the notch 17, respectively the tab 16, of the second half-shelf 12.

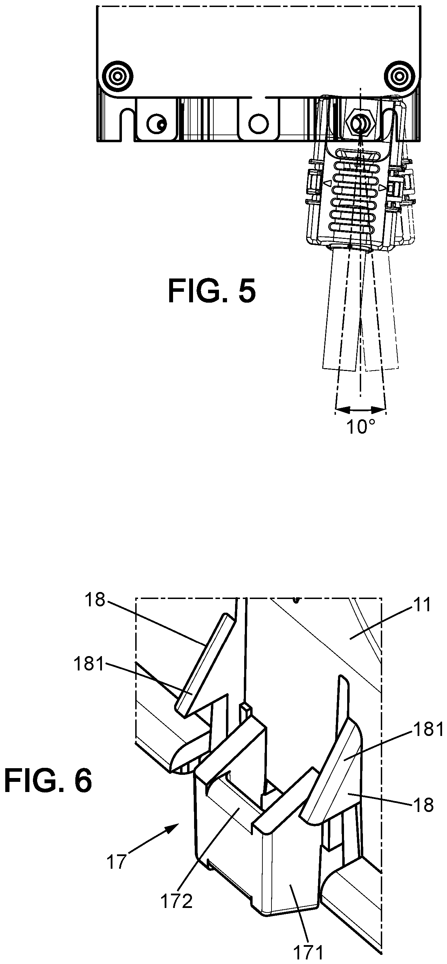

In the embodiment shown on figure 2 and 3, and detailed on figures 5 and 6, the tab is an elongated tab 161 is elastically deformable and protrudes vertically along the first direction Z from each half-shell, for example from an outer wall, and comprises a free end. The free end may comprise a tooth 162 with a stopping surface 163. The elastic deformation of the tab allows the tooth 162 to be at least mobile along a transversal direction Y of the cover box 10. The notch 17 of a first half-shell 11 comprises a hollow sleeve 171 elongating vertically and comprises two openings at its ends configured to let all the way through the elongated tab 161 of the other half-shell. The tooth 162 comprises a biased surface 164 to force the elongated tab 161 out of a resting state when let through the sleeve 171 to a bending state, the sleeve then comprises a stopping edge 172 configured to block the stopping surface 163 of the tooth 162 when the tab comes back to its resting state, the cooperation between the stopping surface 163 and the stopping edge 172 is preventing the two half-shells 11, 12 from disassembling.

Furthermore, as shown in figure 2 the free end of the tab 16 comprises a slot 165 configured to accommodate the end of a tool that may be used to bend the tab back in its bending state to disassemble the two half-shells.

Still in reference to figure 2 and 3, an embodiment of air inlets 20 is shown. Air inlets 20 here define a plurality of apertures to provide an airflow inside the interior volume V in order for example to cool down the electrical connection. In this embodiment, air inlets 20 are elongated transversally, and theirwidth is inferior to 12,5 mm.

According to an embodiment represented on figure 2, the cover box 10 comprises a cable passage 14 delimiting an aperture comprising a first 141 and a second 142 part of aperture, the first half-shell 11 comprising the first part of aperture 141 and the second half-shell 12 comprising the second part of aperture 142. Each of the first 141 and second 142 part of aperture are able to let through an electric cable of the electrical connection 1 in order to avoid any interference when assembling both half-shells 11, 12 together. In this embodiment, the first and second parts of aperture 141, 142 are obstructed by one detachable cover 143.

Still in reference to figure 2 and 3, each half-shell 11, 12 comprises half an obstruction tab 19 that is configured to obstruct at least part of a space between the cables that are let through by the parts of aperture 141, 142. Each half of obstruction tab here being a rigid part, protruding from the cover box in a non-perpendicular way with the cables, and each featuring two curved edge that match or roughly match the shape of the cables in order to perform their obstruction function. When no space in between cables is required to be obstructed, the tab may for example simply remain in place as represented on figure 2 or may be cut off.

Still in reference with figure 2, each half-shell 11, 12 comprises centering holes 113 and pins 114, the pins 114, respectively the centering holes 113, of the first half shell 11 being able to cooperate with the centering holes 113, respectively the pins 114, of the second half-shell when the half-shells 11, 12 are assembled together, the centering holes 113 and pins 114 being able to bring the latching means 16, 17 of the first half-shell 11 facing the latching means 16, 17 of the second half-shell 12. The pins are here designed with a cross shaped cross-section and comprise biased top guiding surfaces 115 defining slopes configured to guide the pins into the centering holes when approaching both half-shells 11, 12 together.

In reference to figure 4, the recesses are designed with a circular cross section. This preferred design allows not to interfere with a slight angular travel of the cover box once assembled around the electrical connection, because the circular inner wall simply rotate around the hexagonal shape of the nut or the screw head. The travel amplitude is shown on figure 5 and reaches +5/-5° in this embodiment.

Still in reference to figure 4, in order to be functional on the majority of electrical connection sizes, the cover box, and especially the recess, is designed in 3 different sizes. In a preferred embodiment, one first size is adapted for a M6x20 nut and screw, and the other two sizes feature different width and cable passage 14 configurations and are adapted for M12x35 nut and screw.

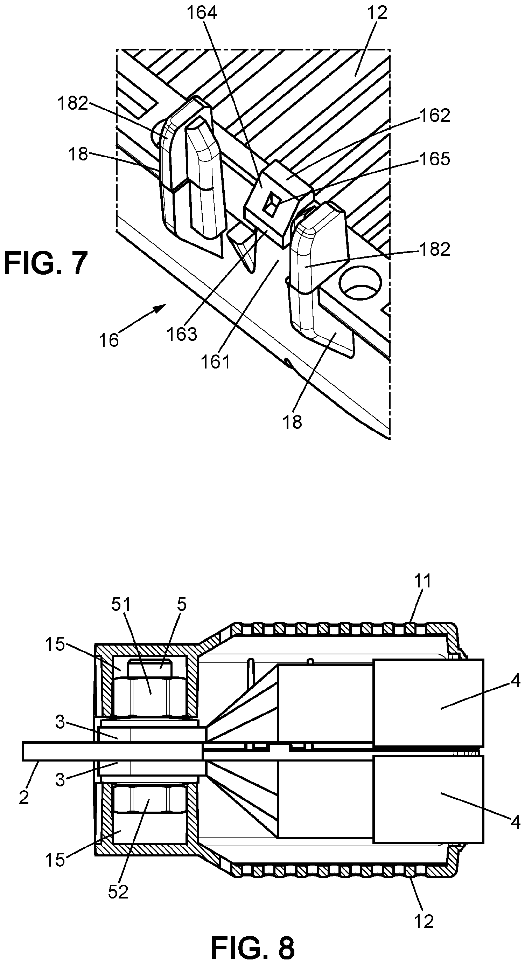

In an embodiment represented on Figure 6 and 7, the cover box 10 comprises two safety walls 18 elongating vertically on both sides of its latching means 16, 17. Each safety wall 18 comprises a first and a second part 181, 182, the first half-shell 11 comprising the first part 181, the second half-shell 12 comprising the second part 182, both parts of each safety wall 18 defining an extension of each other when the first and second half-shells 11, 12 are assembled.

Figure 8 shows a possible embodiment in which two ring-tongues 3 at the end of two cables 4 are accommodated by the cover box 10. The electrical connection 1 also comprises here two wafers: one between the nut 51 and the first ring-tongue 3, the other between the screw head 52 and the second ring-tongue 3. The bar 2 is sandwiched between the two ring-tongues 3. This embodiment shows that the recesses 15 are dimensioned to perform their blocking function with different electrical connection 1 configuration. On figure 1, when one ring-tongue 3 is used, a gap remains between the edges of the recess 15 and the wafer, but the nut 51 is still partly accommodated in the recess and the blocking function is fulfilled, whereas on figure 7 with two ring-tongues 3, the nut 51 is fully accommodated, with no gap remaining, the blocking function being fulfilled as well.

### Industrial application

The present disclosure finds a particular application in any industrial field that may require the protection of electrical connections.

### Parts list

1 - Electrical connection
2 - Bar,
3 - Ring-tongue
4 - Cable
5 - Screw
10 - Cover box
11 - First half-shell
12 - Second half-shell
13 - bar opening
14 - Cable passage
15 - Recess
16 - Latching means, Tab
17 - latching means, Notch
18 - Safety walls
19 - Obstruction tab
20 - Air inlets
51 - Nut
52 - Screw head
113 - Holes
114 - Pins
115 - Top guiding surface
141 - First part of aperture
142 - Second part of aperture
143 - Detachable cover
161 - Elongated tab
162 - Tooth
163 - Stopping surface
164 - Biased surface
165 - Slot
171 - Sleeve
172 - Stopping edge
181 - First part of safety wall
182 - Second part of safety wall
191 - First part of obstruction tab 192 - Second part of obstruction tab
V - Interior volume

## Claims

1. A cover box (10), for protecting an electrical connection (1), the cover box (10) comprising a first and a second half-shell (11, 12) delimiting an interior volume (V) configured to accommodate at least part of the electrical connection (1), each half-shell (11, 12) comprising:
- a recess (15), opening into said interior volume (V);
- latching means (16, 17);
the half-shells (11, 12) being able to be assembled together by cooperation of the latching means (16, 17) of the first half-shell (11) with the latching means (16, 17) of the second half-shell (12), the recess (15) of the first half-shell (11) facing the recess (15) of the second half-shell (12) when the half-shells (11, 12) are assembled together, said electrical connection (1) comprising a screw and a nut (51) cooperating with said screw (5), the nut being able to be engaged in the recess of the first half-shell (11), a head (52) of said screw (5) being able to be engaged in the recess (15) of the second half-shell (12).

2. The cover box according to claim 1, the first and second half shells (11, 12) being identical.

3. The cover box according to claim 1 or 2, the latching means (16, 17) comprising a tab (16) and a notch (17), the tab (16), respectively the notch (17), of the first half-shell (11) being able to cooperate with the notch (17), respectively the tab (16), of the second half-shelf (12).

4. The cover box (10) according to any of the preceding claims, the latching means (16, 17) comprising two safety walls (18) elongating vertically on both sides of the latching means (16, 17).

5. The cover box according to the preceding claim, each safety wall (18) comprising a first and a second part (181, 182), the first half-shell (11) comprising the first part (181), the second half-shell (12) comprising the second part (182), both parts of each safety wall (18) defining an extension of each other when the first and second half-shells (11, 12) are assembled.

6. The cover box (10) according to any of the preceding claims, each half-shell (11, 12) comprising an air inlet (20) defining at least one aperture to link the interior volume (V) to the outside of the cover box (10).

7. The cover box (10) according to any of the preceding claims, comprising a cable passage (14) delimiting an aperture comprising a first (141) and/or a second (142) part of aperture, the first half-shell (11) comprising the first part of aperture (141) and/or the second half-shell (12) comprising the second part of aperture (142), each of the first (141) and/or second (142) part of aperture being able to let through an electric cable of the electrical connection (1).

8. The cover box according to the preceding claim, the first and second parts of aperture (141, 142) being obstructed by at least one detachable cover (143).

9. The cover box (10) according to claims 8 or 9, comprising an obstruction tab (19), the first half-shell (11) comprising a first part of obstruction tab (191) and/or the second half-shell (12) comprising a second part of obstruction tab (192), when the first and second half-shells (11, 12) are assembled together and each part of aperture (141, 142) is letting through a cable of the electrical connection (1), the obstruction tab (19) being configured to obstruct at least part of a space between the cables.

10. The cover box according to any of the preceding claims, each half-shell (11, 12) comprising centering holes (113) and pins (114), the pins (114), respectively the centering holes (113), of the first half shell (11) being able to cooperate with the centering holes (113), respectively the pins (114), of the second half-shell when the half-shells (11, 12) are assembled together, the centering holes (113) and pins (114) being able to bring the latching means (16, 17) of the first half-shell (11) facing the latching means (16, 17) of the second half-shell (12).

11. Assembly (100) comprising a cover box (10) according to any of the preceding claims, and an electrical connection (1) comprising:
- a bar (2);
- at least one ring-tongue (3), each ring-tongue (3) being at an end of an electric cable (4);
- A screw (5) inserted through said bar (2) and said ring-tongue (3), the screw (5) comprising a screw head (52) and elongating along a first direction (Z);
- And a nut (51) tightening said ring-tongue (3) to said bar (2) in cooperation with the screw head (52); the electrical connection (1) being at least partly accommodated by said cover box (10).

12. Method for protecting the electrical connection (1) of the assembly (100) according to the preceding claim, the ring-tongue (3) being joined to the bar (2) by the tightened nut (51) in cooperation with the screw head (52), with the cover box (10) of said assembly, the method comprising the following steps:
- Bringing a first half-shell (11) of the cover box (10) to engage the nut (51) of the electrical connection (1) inside the recess (15) of the first half-shell (11);
- Bringing a second half-shell (12) of the cover box (10) to engage the screw head (52) of the electrical connection (1) inside the recess (15) of the second half-shell (12);
- Assembling the two half-shells (11, 12) by bringing them together along the direction (Z), joining the latching means (16, 17) of the first half-shell (11) with the respective latching means (16, 17) of the second half-shell (12).
